# EUROPÄISCHE PATENTSCHRIFT

(11) **EP 2 887 264 B1**
(45) Veröffentlichungstag und Bekanntmachung des Hinweises auf die Patenterteilung: **03.10.2018**
(21) Anmeldenummer: 14198035.9
(22) Anmeldetag: 15.12.2014
(51) Int. Cl.: G06K 9/00, G06K 9/46

(54) **Kreissegment- und Formdetektion**
Circle segment and form detection
Détection de forme et de segment circulaire

(30) Priorität: 20.12.2013 DE 102013226797
(43) Veröffentlichungstag der Anmeldung: 24.06.2015
(73) Patentinhaber: Fraunhofer-Gesellschaft zur Förderung der angewandten Forschung e.V., 80686 München (DE)
(72) Erfinder: Eickeler, Stefan, 53225 Bonn (DE)
(74) Vertreter: Schenk, Markus

(56) Entgegenhaltungen:
- LOY G ET AL: "Fast shape-based road sign detection for a driver assistance system", INTELLIGENT ROBOTS AND SYSTEMS, 2004. (IROS 2004). PROCEEDINGS. 2004 I EEE/RSJ INTERNATIONAL CONFERENCE ON SENDAI, JAPAN 28 SEPT.-2 OCT., 2004, PISCATAWAY, NJ, USA,IEEE, PISCATAWAY, NJ, USA, Bd. 1, 28. September 2004 (2004-09-28), Seiten 70-75, XP010765785, DOI: 10.1109/IROS.2004.1389331 ISBN: 978-0-7803-8463-7
- LOY G ET AL: "FAST RADIAL SYMMETRY FOR DETECTING POINTS OF INTEREST", IEEE TRANSACTIONS ON PATTERN ANALYSIS AND MACHINE INTELLIGENCE, IEEE COMPUTER SOCIETY, USA, Bd. 25, Nr. 8, 1. August 2003 (2003-08-01) , Seiten 959-973, XP001185067, ISSN: 0162-8828, DOI: 10.1109/TPAMI.2003.1217601
- BARNES N ET AL: "Real-Time Speed Sign Detection Using the Radial Symmetry Detector", IEEE TRANSACTIONS ON INTELLIGENT TRANSPORTATION SYSTEMS, IEEE, PISCATAWAY, NJ, USA, Bd. 9, Nr. 2, 1. Juni 2008 (2008-06-01), Seiten 322-332, XP011347119, ISSN: 1524-9050, DOI: 10.1109/TITS.2008.922935
- WAI HO LI ET AL: "Real Time Detection and Segmentation of Reflectionally Symmetric Objects in Digital Images", INTELLIGENT ROBOTS AND SYSTEMS, 2006 IEEE/RSJ INTERNATIONAL CONFERENCE ON, IEEE, PI, 1. Oktober 2006 (2006-10-01), Seiten 4867-4873, XP031006900, ISBN: 978-1-4244-0258-8
- DAMAVANDI Y B ET AL: "Speed limit traffic sign detection and recognition", CYBERNETICS AND INTELLIGENT SYSTEMS, 2004 IEEE CONFERENCE ON SINGAPORE 1-3 DEC. 2004, IEEE, PISCATAWAY, NJ, USA, 1. Dezember 2004 (2004-12-01), Seiten 797-802, XP032391486, DOI: 10.1109/ICCIS.2004.1460690 ISBN: 978-0-7803-8643-3
- RACHID BELAROUSSI ET AL: "A Real-Time Road Sign Detection Using Bilateral Chinese Transform", 30. November 2009 (2009-11-30), ADVANCES IN VISUAL COMPUTING, SPRINGER BERLIN HEIDELBERG, BERLIN, HEIDELBERG, PAGE(S) 1161 - 1170, XP019135078, ISBN: 978-3-642-10519-7 * Seite 1161 - Seite 1170 *

## Beschreibung

Ausführungsbeispiele der vorliegenden Erfindung beziehen sich auf eine Vorrichtung zur Kreissegmentdetektion sowie auf ein Verfahren zur Kreissegmentdetektion.

Das Detektieren von Kreissegmenten bzw. von Vollkreisen bildet häufig die Basis für optische Bilderkennungssysteme. Anwendungsbeispiele hierfür sind Fahrer-Assistenzsysteme, mittels welchen beispielsweise Verkehrszeichen entweder für die Unterstützung des Autofahrers oder auch für selbständig fahrende Fahrzeuge automatisch erkannt werden können. Bei derartigen Verkehrszeichenerkennungssystemen wird in einem initialen Schritt auf Basis einer Umgebungsaufnahme das Vorhandensein eines Verkehrszeichens untersucht. Da der größte Teil der relevanten Verkehrszeichen rund ist, kann dieser Schritt mittels einer Kreissegmentdetektion bzw. Vollkreisdetektion durchgeführt werden.

Eine klassische Methode zur Erkennung von Kreisen bzw. Kreissegmenten ist die sogenannte Circular-Hough-Transformation. Hierbei gibt es unterschiedliche Versionen, die für unterschiedliche Entwicklungsziele entwickelt sind. Insbesondere im Fall von Fahrerassistenzsystemen liegt ein wichtiges Entwicklungsziel in der Echtzeitfähigkeit derartiger Systeme, was insbesondere eine schnelle Datenverarbeitung voraussetzt. Ein weiteres wesentliches Entwicklungsziel, insbesondere für mobile Anwendungen, ist der geringe Ressourcen- / Energieverbrauch bei der Berechnung.

Eine schnelle Version der Circular-Hough-Transformation ist unter dem Namen "Fast-Radio-Symmetry-Detection" bekannt. Hierbei wurde, um die Echtzeitfähigkeit zu erreichen, das Verfahren für die Verarbeitung auf parallelen Prozessoren bzw. allgemein auf eine speziell entwickelte Hardware ausgelegt, was aber einerseits den Energieverbrauch erhöhen kann und insbesondere spezielle Hardware voraussetzt.

Eine Veröffentlichung mit dem Titel Loy G. et al., "Fast Radial Symmetry for Detecting Points of Interests", IEEE TRANSACTIONS ON PATTERN ANALYSIS AND MACHINE INTELLIGENCE, IEEE COMPUTER SOCIETY, USA, Bd. 25, Nr. 8, 1. August 2003 (2003-08-01), Seiten 959-973, ISSN: 0162-8828, DOI: 10.1109/TPAMI.2003.1217601, beschreibt einen Ansatz zur Kantendetektion, insbesondere unter Ausnutzung lo kal-radial symmetrischer Merkmale. Diese Veröffentlichung schlägt beispielsweise die Verwendung eines Gaussian-Kernels vor.

Ausgehend hiervon zielen heutige Entwicklungsaktivitäten darauf ab, die Geschwindigkeit auch bei dem Einsatz von Standard-Hardware weiter zu steigern und insbesondere den Ressourcen / Energieverbrauch derart gering zu halten, dass ein Einsatz derartiger Systeme auf mobilen Geräten, wie z.B. Smartphones, möglich ist.

Aufgabe der vorliegenden Erfindung ist es also eine Vorrichtung und ein Verfahren zu schaffen, die eine Detektion von geometrischen (Grund-) Formen bzw. insbesondere eine Kreissegmentdetektion bzw. Kreisdetektion mit gesteigerter Verarbeitungsgeschwindigkeit und reduziertem Ressourcenverbrauch ermöglichen.

Die Aufgabe wird durch die unabhängigen Patentansprüche gelöst.

Ausführungsbeispiele der vorliegenden Erfindung schaffen eine Vorrichtung zur Kreissegmentdetektion, die Vorrichtung ist ausgebildet, um erstens Gradienten zu detektieren, so dass Gradientenvektoren erhalten werden, und zweitens, um die Gradientenvektoren mit jeweiligen Radien zu skalieren und resultierende Endpunkte der jeweiligen, skalierten Gradientenvektoren in den den jeweiligen Radien zugeordneten Akkumulatorarrays zu akkumulieren. Hierbei wird eine Auflösung der Akkumulatorarrays umso geringer gewählt, je größer der jeweilige (gesuchte Kreis-) Radius ist.

Die Erfindung beruht also auf der Erkenntnis, dass ein geometrische Form bzw. entsprechend bevorzugten Ausführungsbeispielen ein Kreis bzw. ein Kreissegment mit einem kleinen Radius (im allgemeinem Fall mit kleinen Abmessungen) am besten mit einem hochaufgelösten Akkumulatorarray erkennbar ist, während eine Form / ein Kreis bzw. ein Kreissegment mit einer großen Abmessung bzw. einem großen Radius besser mit einem Akkumulatorarray mit reduzierter Auflösung erkennbar ist. Der Grund hierfür liegt darin, dass durch die Auflösungsreduzierung des Akkumulatorarrays bei der Akkumulation der Gradientenvektoren-Endpunkte, die sich bei Vorhandensein eines Kreises bzw. eines Kreissegments typischerweise in einem Punkt, nämlich dem Mittelpunkt treffen bzw. hier aufakkumulieren, die Ortsunschärfe, die durch die Streuung der Endpunkte über einen Bereich aufgrund der Vielzahl der zu akkumulierenden Endpunkte (Bildrauschen) insbesondere bei großen Abmessungen/Radien entsteht, reduziert werden kann. Diese Erkenntnis wird in der Erfindung dadurch ausgenutzt, dass kleinere Akkumulatorarrys, also Arrays mit reduzierter Auflösung, für die Detektion von großen Formen /Kreisradien eingesetzt werden, um so eine Ressourceneinsparung zu erzielen. Hierdurch wird einerseits die zu verarbeitende Datenmenge, also der Speicherplatz reduziert und andererseits rechenintensive Schritte, wie nachträgliches Gauß-Filtern zur Reduzierung der Ortsunschärfe, vermieden. Somit ergibt sich der Vorteil, dass das Verfahren gegenüber dem Standardverfahren um Faktor 10 schneller ist, wobei auch auf spezielle Grafikprozessoren mit hohem Energieverbrauch oder andere Implementierungen in Hardware verzichtet werden kann. Des Weiteren ist gegenüber dem Standardverfahren auch der Speicherbedarf durch die verwendete Größe der Akkumulatorarrays reduziert. Also wird eine deutlich kostengünstigere und energiesparende Realisierung von Geometriedetektoren/Kreisdetektoren, z.B. für Fahrassistenzsysteme, ermöglicht, die gegebenenfalls auch auf mobilen Einrichtungen, wie z.B. Smartphones, ausführbar ist.

Entsprechend weiteren Ausführungsbeispielen ist die Vorrichtung dazu ausgebildet, um eine oder mehrere lokale Akkumulationsmaxima, resultierend aus der Vielzahl der aufakkumulierten Endpunkte von zu einem Kreis oder Kreissegment gehörenden Gradientenvektoren, die in einen gemeinsamen Bereich bzw. Punkt projiziert werden, zu erkennen. Hierbei gibt jede Position eines lokalen Akkumulationsmaximums die Position eines Mittelpunktes eines detektierten Kreises an. Des Weiteren kann entsprechend weiteren Ausführungsbeispielen anhand dessen, in welchem Akkumulatorarray die entsprechenden Radien zugeordnet sind, einen Rückschluss auf den Radius des erkannten Kreises gezogen werden, da dieser dem den Array zugeordneten Radius, welche für die Skalierung verwendet ist, entspricht.

Entsprechend Ausführungsbeispielen werden also unterschiedlich aufgelöste Arrays für unterschiedlich gesuchte Radien eingesetzt, wobei bevorzugt die Auflösung des Akkumulatorarrays um einen reziproken Wert der zugeordneten Radien reduziert ist.

Entsprechend weiteren Ausführungsbeispielen können auch Mittel zur Vorverarbeitung, wie z.B. ein Gaußscher Weichzeichner und ein Soebel-Filter vorgesehen sein, die ermöglichen, auf Basis eines Ausgangsbildes die Gradienten bzw. die relevanten Gradienten zu ermitteln. Ferner kann entsprechend Ausführungsbeispielen die obige Vorrichtung dazu ausgebildet sein, um bei der Vorverarbeitung relevante Gradientenpunkte, für welche die Gradientenvektoren in das Array zu übertragen sind, unter der Vielzahl der Bildpunkte des Ausgangsbildes beispielsweise anhand eines vorgegebenen Schwellwerts zu erkennen.

Weitere Ausführungsbeispiele beziehen sich auf ein Verfahren zur Kreisdetektion mit den Schritten des Detektierens von Gradienten, so dass Gradientenvektoren erhalten werden, und des Skalierens der Gradientenvektoren mit jeweiligen Radien sowie des Akkumulierens der resultierenden Endpunkte der jeweiligen, skalierten Gradientenvektoren in den den jeweiligen Radien zugeordneten Akkumulatorarrays. Hierbei ist eine Auflösung der Akkumulatorarrays wiederum umso geringer, je größer der jeweilige Radius ist.

Gemäß weiteren Ausführungsbeispielen ist die Vorrichtung dazu ausgebildet, geometrische Grundformen (z.B. Quadrate oder Polygone) zu detektieren. Hierzu erfolgt das Detektieren der Gradienten, so dass Gradientenvektoren erhalten werden. Ferner werden die Gradientenvektoren mit jeweiligen Streckungsfaktoren (z.B. von der geometrischen Grundform abhängigen Streckungsfaktoren) skaliert und resultierende Endpunkte der jeweiligen, skalierten Gradientenvektoren in den den jeweiligen Streckungsfaktoren zugeordneten Akkumulatorarrays akkumuliert. Entsprechend den obigen Erläuterungen ist die Auflösung der Akkumulatorarrays umso geringer, je größer der jeweilige Streckungsfaktor ist.

Entsprechend weiteren Ausführungsbeispielen kann das beschriebene Verfahren auch auf einem Computer ausgeführt werden, so dass also ein Ausführungsbeispiel demzufolge ein Computerprogramm mit einem Programmcode zur Durchführung des Verfahrens zur Kreissegmentdetektion umfasst.

Ausführungsbeispiele der vorliegenden Erfindung werden nachfolgend anhand der beiliegenden Zeichnungen erläutert. Es zeigen:
- Fig. 1: ein schematisches Blockschaltbild einer Vorrichtung zur Kreissegmentdetektion gemäß einem ersten Ausführungsbeispiel;
- Fig. 2: ein schematisches Flussdiagramm des Verfahrens bei der Kreissegmentdetektion gemäß einem weiteren Ausführungsbeispiel;
- Fig. 3a und 3b: ein Stand-der-Technik-Ansatz (Blockschaltbild der Bildverarbeitungsvorrichtung und schematische Schaubilder der Bildverarbeitung) bei der Kreisdetektion zur Illustration der erreichten Verbesserung; und
- Fig. 3c und 3d: das Konzept (Blockdiagramm der Bildverarbeitungsvorrichtung und schematisches Schaubilder) einer Kreisdetektion mit dem verbesserten Ansatz entsprechend einem erweiterten Ausführungsbeispiel.

Bevor nachfolgend Ausführungsbeispiele der vorliegenden Erfindung anhand der Figuren im Detail erläutert werden, sei darauf hingewiesen, dass gleichwirkende oder gleiche Elemente mit gleichen Bezugszeichen versehen sind, so dass die Beschreibung derer austauschbar bzw. aufeinander anwendbar ist.

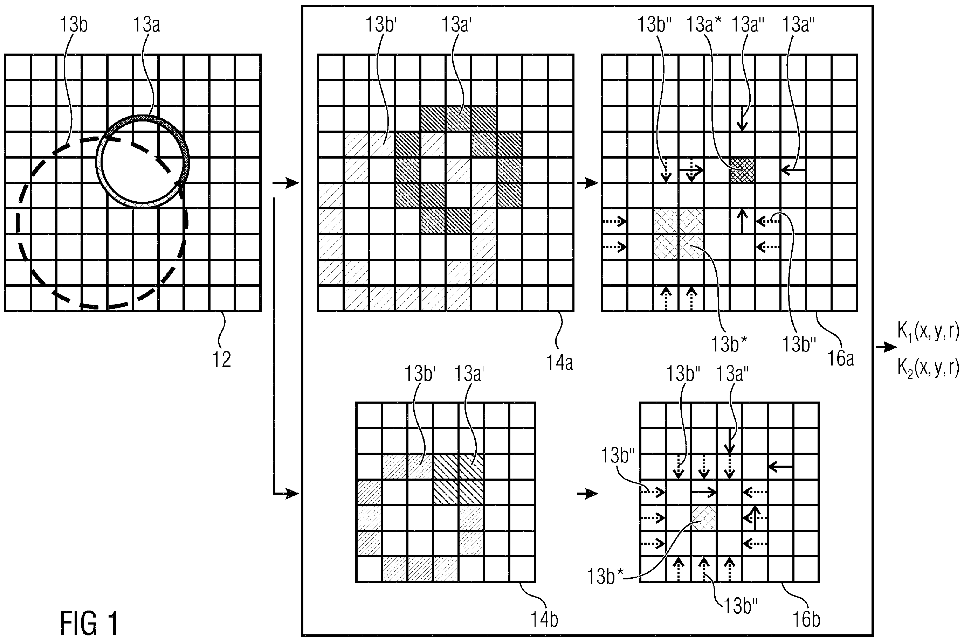

Fig. 1 zeigt eine Vorrichtung 10 zur Kreisdetektion. Die Vorrichtung umfasst eine Berechnungseinheit, wie z.B. einen CPU, die ausgebildet ist, um beispielsweise auf Basis eines sogenannten Ausgangsbildes 12, welches hier als Bild mit einer Auflösung von 10x10 Pixel dargestellt ist, Gradienten zu detektieren. Zu Illustrationszwecken sind exemplarisch relevante Gradientenpunkte, resultierend aus der Gradientenermittlung basierend auf dem Ausgangsbild 12, die exemplarischen Kreisen 13a und 13b aus dem Ausgangsbild 12 zuzuordnen sind, als gestrichelte Bildpunkte 13a' und 13b' in den Gradientenbildern 14a und 14b dargestellt. Auf Basis dieser relevanten Gradientenpunkte 13a' und 13b', die sich typischerweise durch eine hohe Änderungsrate, z.B. einen hohen Kontrast, auszeichnen, kann dann ein sogenanntes Gradientenfeld mit Gradientenvektoren13a" und 13b" für die relevanten Gradientenpunkte 13a' und 13b' ermittelt werden, wie anhand der Gradientenfelder 16a und 16b gezeigt ist. Im Detail wird für jedes Pixel bzw. ggf. auch nur für jedes relevante Pixel 13a' und 13b' ein Gradientenvektor ermittelt, wie anhand der Gradientenfelder 16a bzw. 16b illustriert ist. Die Bilder 16a und 16b umfassen sowohl die Gradientenvektoren 13a" und 13b" (vgl. Pfeile) als auch exemplarische Endpunkte 13a* und 13b* der Gradientenvektoren 13a" und 13b" (vgl. kreuzstraffierte Bildpunkte). Insofern ist die Vorrichtung dazu ausgebildet, Gradienten zu detektieren, so dass Gradientenvektoren 13a" und 13b" erhalten werden.

Ferner ist die Vorrichtung dazu ausgebildet, auf Basis der Gradientenvektoren zu detektieren, ob Kreissegmente vorliegen. Hierzu werden die Gradientenvektoren mit jeweiligen Radien skaliert und die resultierenden Endpunkte der jeweiligen, skalierten Gradientenvektoren in den den jeweiligen Radien zugeordneten Akkumulatorarray zugeordnet. Auf die dargestellte Illustration gemapped heißt das, dass jedes zu Illustrationszwecken dargestellte Gradientenbild 14a und 14b bzw. jedes Gradientenfeld 16a und 16b zu einem vorbestimmten Radius gehört und als Zwischenergebnis in einem Akkumulatorarray gespeichert ist. Die Akkumulatorarrays der Vorrichtung 10 unterscheiden sich hinsichtlich ihrer Größe insofern, dass die Akkumulatorarrays zur Detektion kleiner Radien größer sind, also eine höhere Auflösung haben, während die Akkumulatorarrays zur Detektion großer Radien eine niedrigere Auflösung aufweisen. Unter einem niedriger aufgelösten Akkumulatorarray ein Array von Akkumulationszellen zu verstehen, das gegenüber der ursprünglichen Akkumulatoranordnung eine reduzierte Anzahl von Akkumulationszellen umfasst. Dieser Sachverhalt wird durch die doppelte Darstellung der Gradientenbilder 14a und 14b bzw. der Gradientenfelder 16a und 16b illustriert. Der Hintergrund hierzu wird nachfolgend anhand der Funktionsweise bei der Erkennung der exemplarischen Kreise 13a und 13b aus dem Ausgangsbild 12 erläutert.

Die Kreise 13a und 13b in dem Ausgangsbild 12, die beispielsweise aus dem Umriss eines Verkehrszeichens resultieren, weisen gegenüber der Umgebung, also gegenüber den angrenzenden Pixeln einen hohen Kontrast auf, so dass auf Basis dieser Kontrastdifferenz zwischen den aneinander angrenzenden Pixeln ein Gradient 13a' und 13b' mit einem Gradientenvektor 13a" und 13b" ermittelt werden kann. Die Pixel mit der höchsten Kontrastdifferenz sind in der Darstellung 14a anhand der schraffierten Zellen illustriert und stellen wie bereits erläutert, die relevanten Gradientenpunkte dar. Allgemein heißt dass, dass Pixel als relevant gelten, wenn ihre Kontrastdifferenz oder allgemein ihre Änderungsrate gegenüber dem angrenzenden Bildpunkt oberhalb eines vorbestimmten Grenzwertes liegt. Wie zu erkennen ist, sind hier insbesondere die Bildpunkte entlang der Kontur der Kreise 13a und 13b (vgl. 13a' und 13b') relevant. Zur Ermittlung der relevanten Pixel wird ein lokaler Vergleich der aneinander angrenzenden Bildpunkte durchgeführt, um so z.B. Kontrastdifferenzen oder Helligkeitsunterschiede zu ermitteln. Diese Gradienten können anhand eines Vektors, dem sogenannte Gradientenvektor, dargestellt werden. Die Länge des Vektors gibt den Betrag der Differenz an, während die Richtung des Vektors die Richtung der Änderung symbolisiert. Für die relevanten Bildpunkte 13a' und 13b' werden also nun die Gradientenvektoren 13a" und 13b" ermittelt und in das Vektorfeld 16a' bzw. 16b' übernommen. Das Ergebnis ist also je Kreis 13a und 13b eine Vielzahl an Vektoren 13a" bzw. 13b", die entlang der Gradienten ausgerichtet sind. Für einen Kreis bzw. ein Kreissegment, wie in dem vorliegenden Ausführungsbeispiel, zeigen alle Gradientenvektoren 13a" und 13b" zu dem jeweiligen Mittelpunkt 13a* und 13b* hin. Es sei an dieser Stelle angemerkt, dass auch wenn nur die orthogonalen Gradientenvektoren 13a" und 13b" illustriert sind, dass das Vektorfeld typischerweise eine Vielzahl an Gradientenvektoren 13a" und 13b" umfasst, die in radialer Richtung verlaufen und aufgrund der Rotationssymmetrie des Kreises alle auf den Mittelpunkt 13a* und 13b* zeigen. Der Vollständigkeit halber sei angemerkt, dass Gradientenvektoren, die beispielsweise zu einer Geraden gehören, parallel verlaufen und sich somit nicht in einem gemeinsamen Punkt schneiden. Insofern ist auf Basis dessen, dass sich eine Vielzahl an Gradientenvektoren 13a" und 13b" in einem gemeinsamen Punkt schneiden, ein Vollkreis oder ein Kreissegment 13a und 13b detektierbar. Der gemeinsame Punkt, in welchem sich die Gradientenvektoren 13a" und 13b" schneiden, stellt den Mittelpunkt 13a* oder 13b* des Kreises bzw. des Kreissegmentes dar. Also ist durch diese Vorgehensweise die Position des Mittelpunkts 13a* und 13b* der Kreise 13a und 13b detektierbar.

Um nun den Radius des Kreises 13a bzw. 13b zu ermitteln, wird nun der Schritt des Abbildens der Gradientenvektoren 13a" und 13b" auf einen gemeinsamen Punkt 13a* bzw. 13b* in einer modifizierten Art und Weise durchgeführt, nämlich so, dass jeder Gradientenvektor 13a" und 13b" mit einem vorbestimmten Radius skaliert werden. Dieser Radius entspricht einem vermuteten Radius des Kreises 13a bzw. 13b. Durch das Skalieren werden die Endpunkte der Gradientenvektoren 13a" und 13b" ausgehend von dem relevanten Gradientenpunkt in Richtung der Gradientenvektoren 13a" und 13b" abgebildet. Wenn der zur Skalierung gewählte Radius so gewählt ist, dass dieser dem Radius des ursprünglichen Kreises 13a (oder 13b) entspricht, werden die Endpunkte in dem gemeinsamen Mittelpunkt 13a* (oder 13b*) abgebildet und hier aufakkumuliert, wie anhand des Kreises 13a dargestellt ist. Durch die Akkumulation mittels des Akkumulationsarrays 16a kommt es zu der Ausbildung eines lokalen Maximums an dem Ort der Endpunkte, d.h. an dem Ort des Mittelpunkts 13a*. Im Falle des Kreises 13b entspricht der Radius bei der Skalierung nicht dem Radius des Kreises 13b, so dass eine Abbildung in einem gemeinsamen Punkt nicht möglich ist. Hierzu müsste dann der Radius, welcher für die Skalierung genutzt wird, entsprechend vergrößert werden, bis sich alle relevanten Punkte13b' des Kreises 13b in einem gemeinsamen Mittelpunkt 13b* treffen.

Bei großen Radien, wie beim Radius 13b ist allerdings problematisch, dass aufgrund der Länge der Gradientenvektoren 13b" eine Vielzahl an als relevant gekennzeichneter Punkt, also Bildpunkte 13b' des Kreises 13b, aber auch weitere nicht zum Kreis gehörende Punkte in den Mittelpunkt projiziert werden, so dass es zu lokalen Streuungseffekten bei der Abbildung der Endpunkte kommt. Infolge dessen wird anstelle eines eindeutigen Mittelpunkts 13b* ein Feld, in welchem der Mittelpunkt 13b* liegt, generiert. Hier kann dann im Nachgang z.B. mittels Gaußschen Filterns der exakte Mittelpunkt herausgefiltert werden, wobei jedoch gerade dieses Gauscher Filtern, wie auch die Vielzahl der Abbildungen der Gradientenvektoren 13b" erheblichen Rechenaufwand erzeugt. Deshalb hat sich gezeigt, dass es aus Performancesicht günstiger ist, für die Suche von großen Kreisen angepasste Akkumulatorarrays zu nutzen.

Die angepassten Akkumulatorarrays 16b weisen gegenüber den ursprünglichen Akkumulatorarrays 16a eine reduzierte Auflösung (hier: 7x7) auf. D.h. also, dass das Ausgangsbild 12 bei dem Detektieren größerer Radien in ein Akkumulationarray 16b mit reduzierter Auflösung abgebildet wird. Anhand des Vektorfelds 16b ist zu erkennen, dass insbesondere der Kreis 13b (vgl. relevante Punkte 13b' bzw. Gradientenvektoren 13b" in den Gradientenbildern 14b) im Vergleich zu den hochaufgelösten Akkumulatorarrays 16a wesentlich eindeutiger abgebildet wird. Dies trifft insbesondere auf die Akkumulierung der Endpunkte der Gradientenvektoren 16b", die bei richtiger Wahl des Radius zur Skalierung auf den Kreismittelpunkt 13b* abgebildet werden, zu. Der Vollständigkeit halber sei darauf hingewiesen, dass allerdings kleine Radien in den Akkumulatorarrays 16b mit der reduzierten Auflösung nicht so gut identifizierbar sind. Zusammenfassend ist also festzustellen, dass kleine Radien (bezogen auf den absoluten Wert) mittels hochaufgelösten Akkumulatorarrays 16a bevorzugt zu detektieren sind, während große Kreisradien mittels Akkumulatorarrays 16b mit reduzierter Auflösung bevorzugt zu detektieren sind.

Entsprechend Ausführungsbeispielen kann die Auflösungsreduktion der Arrays reziprok zu der absoluten Größe des gesuchten Kreisradius erfolgen. Somit kann beispielsweise dann auch die pixelweise Skalierung entlang der Gradientenvektoren 13a" bzw. 13b" mit dem gleichen Pixelsprung unabhängig von der gewählten Auflösung, also mit einer Skalierung entsprechend einem Einheitsradius (in Pixeln) bzw. Einheitsvektors (in Pixeln), z.B. 10 Pixel erfolgen.

Entsprechend weiteren Ausführungsbeispielen ist die Vorrichtung 10 dazu ausgebildet, lokale Akkumulationsmaxima zu erkennen, die den Mittelpunkt 13a* bzw. 13b* anzeigen. Hierbei sei angemerkt, dass das lokale Akkumulationsmaximum umso stärker ausgeprägt ist, je kleiner der Öffnungswinkel des Kreissegments ist.

Entsprechend weiteren Ausführungsbeispielen kann, um die obigen Effekte der lokalen Streuung weiter zu reduzieren, die Akkumulation bzw. die Detektion der lokalen Akkumulationsmaxima mittels einer n x n, z.B. mittels einer 2x2-Matrix, erfolgen. Hierbei wird also dann das lokale Maximum anhand eines Summenwertes für n x n nebeneinander quadratisch angeordnete Pixel ermittelt.

Entsprechend Ausführungsbeispielen ist die Vorrichtung 10 dazu ausgebildet, als Ausgangsinformationen eine Information über den detektierten Kreis, K₁(x,y,r) für den Kreis 13a bzw. K₂(x,y,r) für den Kreis 13b auszugeben. Diese Informationen umfassen jeweils die Koordinate des Kreismittelpunkts in x- und in y-Richtung sowie den zugehörigen Radius r des jeweiligen Kreises 13a bzw. 13b. Der Kreisradius r ist anhand dessen zu bestimmen, in welchem Akkumulationsarray, die eben bestimmten gesuchten Radien r zugeordnet sind, der jeweilige Kreis erkannt wurde.

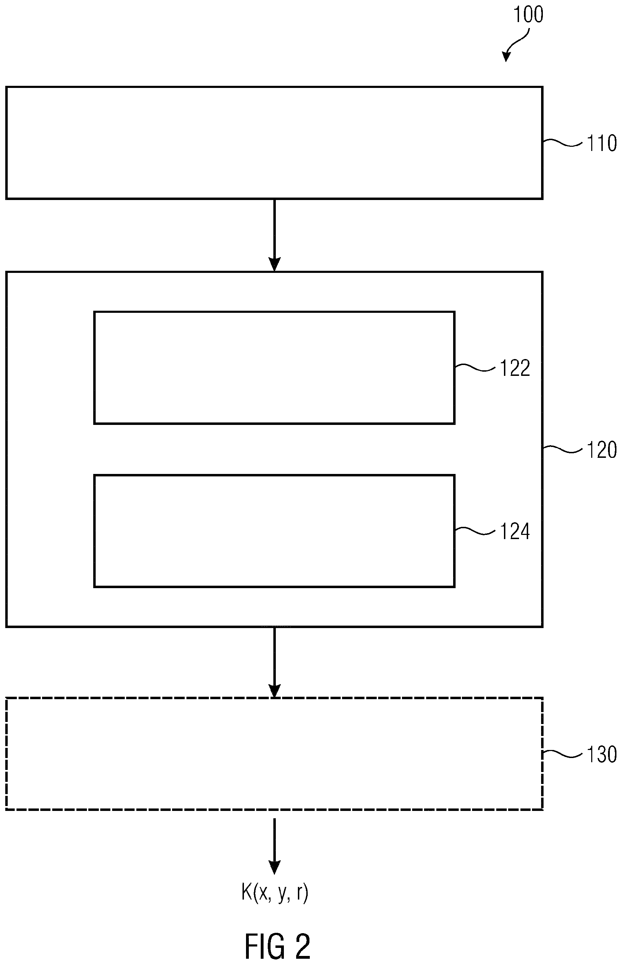

Nachfolgend wird anhand von Fig. 2 das zugehörige Verfahren bei der Detektion von Kreissegmenten beschrieben.

Fig. 2 zeigt ein Flussdiagramm des Verfahrens 100 mit zwei Basisschritten 110 und 120. Der Schritt 110 umfasst das Detektieren von Gradienten, so dass Gradientenvektoren erhalten werden, und wird, wie Bezug nehmend auf die Fig. 1 bereits ausführlich erläutert wurde, beispielsweise unter Zuhilfenahme von vorbestimmt Schwellwerten für die Identifikation von relevanten Gradientenpunkten durchgeführt.

Der zweite Schritt 120 umfasst zwei Unterschritte 122 und 124. Der Unterschritt 122 bezieht sich auf das Skalieren der Gradientenvektoren mit den jeweiligen (gesuchten) Radien. In einem nächsten Schritt 124 werden dann die resultierenden Endpunkte der jeweiligen skalierten Gradientenvektoren in der Mehrzahl der den jeweiligen Radien zugeordneten Akkumulatorarrays aufakkumuliert. Entsprechend dem obigen Ausführungsbeispiel unterscheiden sich die mehreren Akkumulatorarrays in ihrer Auflösung, da die Auflösung umso geringer gewählt ist, je größer der jeweilige Radius ist.

Das Verfahren kann entsprechend weiteren Ausführungsbeispielen einen zusätzlichen Schritt 130 des Ermittelns lokaler Akkumulationsmaxima der Vielzahl der Endpunkte in den den jeweiligen Radien zugeordneten Akkumulatorarrays umfassen, wobei dieser Schritt nach dem Schritt 124 bzw. nach dem Schritt 120 angeordnet ist. Das Ergebnis des Verfahrens 100 kann also die Ausgabe eines detektierten Kreises oder auch detailliert die Information über die Position bzw. die Koordinate des Kreismittelpunkts des detektierten Kreises zusammen mit dem Radius sein (vgl. Ergebnisfeld K(x,y,r)) sein.

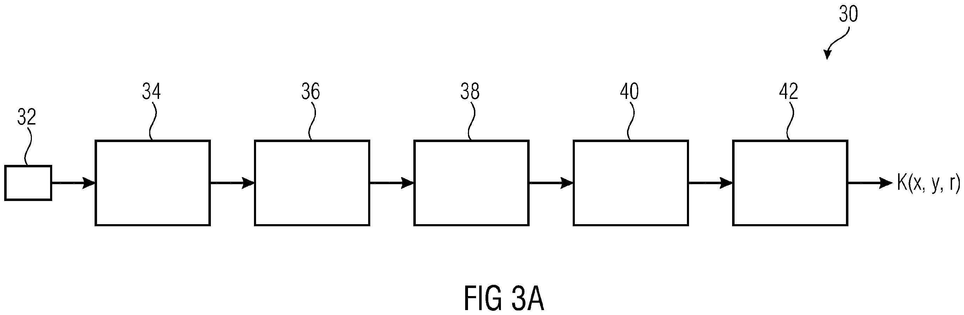

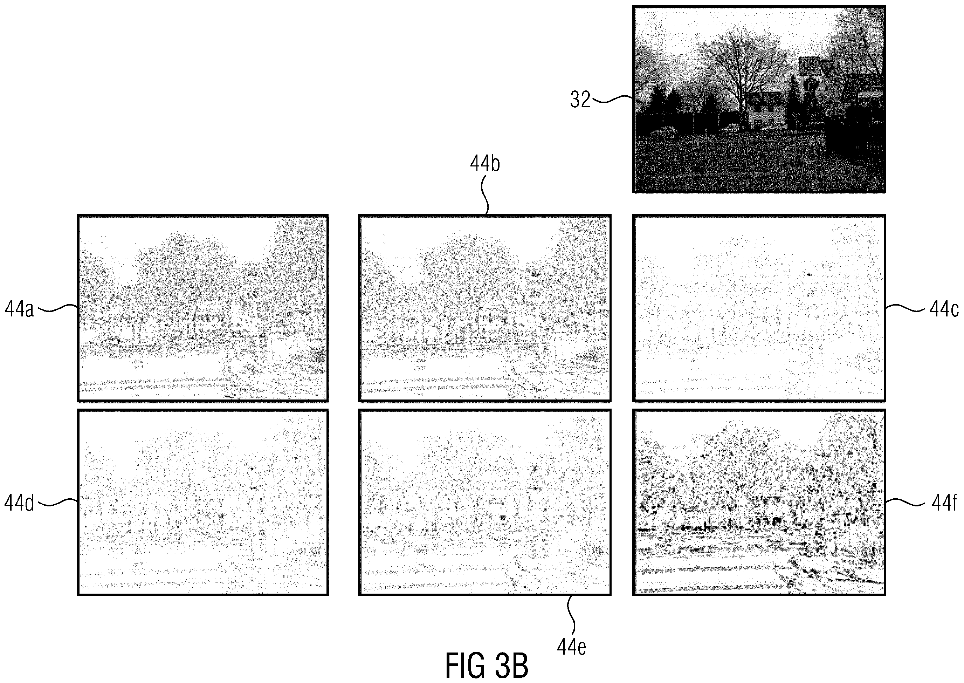

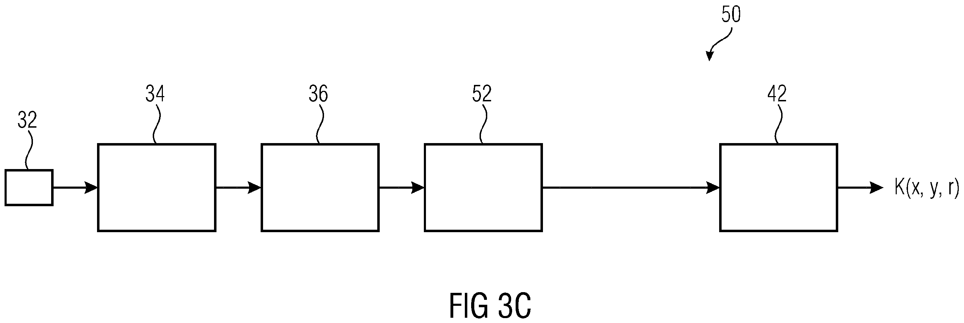

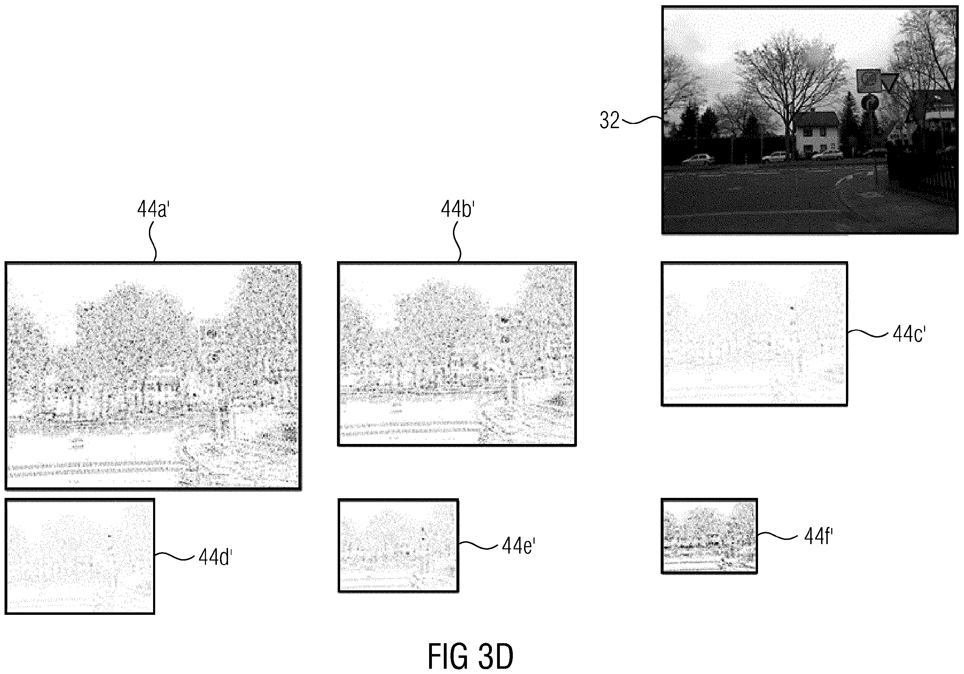

Bezug nehmend auf Fig. 3 wird nun ein detailliertes Ausführungsbeispiel der oben beschriebenen Vorrichtung erläutert, wobei Bezug nehmend auf Fig. 3a und 3b eine konventionelle Prozesskette und Bezug nehmend auf Fig. 3c und 3d eine Prozesskette entsprechend dem verbesserten Ansatz ausgeführt wird.

Fig. 3a zeigt eine Prozesskette 30 zur Verarbeitung eines Eingangsbildes 32 mit den Funktionseinheiten Gaußscher Filter 34, Soebel-Filter 36, Einheit zur Mittelpunktschätzung und Akkumulierung 38, weiterer Gaußscher Weichzeichner 40 und Maximumdetektion 42, so dass mittels dieser Prozesskette 30 ein Kreis detektiert werden kann und eine Detektionsinformation K(x,y,r) ausgegeben werden kann.

Ausgehend von dem Eingangsbild 32 wird dieses mit dem Gaußschen Filter 34 mit sehr kleinem Filterradius, z.B. Radius 1,0 (oder Radius zwischen 0,1 und 10,0), weichgezeichnet. In einem nächsten Schritt erfolgt mit einem Soebel-Operator 36 die Berechnung der Kantenintensität, also der Gradienten. Hierbei wird typischerweise die Kantenintensität sowohl in horizontaler als auch in vertikaler Richtung für jeden Bildpunkt bzw. jedes Pixel berechnet, so dass man einen Einheitsvektor zusammen mit dem Betrag (vgl. Gradientenvektor aus Fig. 1) erhält.

Entsprechend dem Stand-der-Technik-Verfahren wird nun ausgehend von den Gradienten mittels der Einheit 38 eine Mittelpunktschätzung für jeden zu detektierenden Kreisradius durchgeführt. Dies erfolgt mittels eines Akkumulatorarrays, das typischerweise gegenüber dem Eingangsbild dieselbe Bildgröße, also dieselbe Auflösung aufweist. Hierbei wird jeder Bildpunkt, dessen Betrag der Kantenintensität oberhalb einer Schwelle liegt, als Teil eines Kreises angenommen. Für jeden zu detektierenden Kreisradius wird jeweils die Akkumulationszelle, die sich aus der Pixelposition plus das Produkt von Kreisradius mal Einheitsvektor ergibt, um 1 erhöht, um so das Bild hinsichtlich des Vorhandenseins unterschiedlich großer Kreise zu untersuchen. Die Akkumulationszelle, die sich aus der Pixelposition minus das Produkt von Kreisradius mal dem Einheitsvektor ergibt, wird um 1 erniedrigt. Um nun die oben bereits angesprochenen Streuungen (resultierend aus fälschlicherweise als Teil eines Kreises angenommen relevanten Grandientenpunkten und/oder aus minimal falsch ermittelten Gradientenvektoren) zu eliminieren, erfolgt eine Glättung unter Zuhilfenahme eines weiteren Gaußschen Filters 40, wobei hier der Radius im Vergleich zum Gaußschen Filter 34 wesentlich größer ist, z.B. Radius 10 bis 60. Hierbei wird der Radius des Filters so gewählt, dass dieser dem Radius des zu detektierenden Kreises entspricht. Durch dieses Vorgehen ist es insbesondere für den Fall von großen Kreisradien, bei denen die Mittelpunktschätzung typischerweise durch Bildrauschen überlagert ist, möglich, das Bildrauschen durch die großen Filterradien zu kompensieren. Dieser Rechenschritt benötigt allerdings mindestens 90% der Rechenzeit und stellt daher ein großes Optimierungspotenzial dar.

In einem letzten Schritt erfolgt die Detektion der Betragsmaxima mittels der Einheit 42 in den Akkumulationsarrays. Das Akkumulationsmaximum gibt den Mittelpunkt des Kreises bei dem vorgegebenen Radius an. Somit ist das Ergebnis dieser Prozesskette 30 die detektierten Kreise mit einem bestimmten Radius inklusive Koordinate des Kreismittelpunkts. Wenn diese Prozesskette 30 bzw. die Bearbeitungseinheiten 38, 40 und 42 für unterschiedliche Radien durchlaufen werden, können unterschiedlich große Kreise detektiert werden.

Fig. 3b illustriert die Verwendung von Akkumulatorarrays bei sechs Kreisradien. Ausgehend von dem initialen Bild 32 werden nun die sechs Akkumulatorarrays 44a, 44b, 44c, 44d, 44e und 44f, welche für jeden Radius eine konstante Größe aufweisen, beschrieben. Hierdurch kann unabhängig von dem Kreisdurchmesser eine pixelgenaue Lokalisierung des Kreises erfolgen. Die Detektion der den zwei Verkehrsschildern zugeordneten Kreise ist insbesondere in den Akkumulatorarrays 44c und 44d anhand der punktförmig ausgebildeten lokalen Maxima (mit Einschränkung auch in dem Akkumulatorarray 44e) möglich, da der hier eingesetzte Radius bei der Mittelpunktdetektion mit hinreichender Genauigkeit den Kreisradien der Schilder aus dem Bild 32 entspricht. Da allerdings der größte Anteil des Bildes 32 keine Kreise enthält, erfolgt auch die Nicht-Detektion der Kreise mit unnötig hoher Genauigkeit und folglich unnötigem Rechenaufwand. Wie oben bereits erläutert, ist insbesondere die Operation des zweiten Gaußschen Filters 40 für große Kreisradien sehr rechenintensiv. Basierend auf dieser Erkenntnis wird nun eine optimierte Prozesskette 50 gestaltet, die mit reduziertem Rechenaufwand die Kreisdetektion ermöglicht.

Fig. 3c zeigt die optimierte Prozesskette 50, wobei hier insbesondere die Einheiten 34, 36 und 42 identisch zu der in Fig. 3a vorgestellten Prozesskette 30 sind. Die Einheit 52 zur Mittelpunktschätzung und Mittelpunktakkumulierung ist allerdings derart modifiziert, dass die Prozesskette ohne die zweite Gaußsche Filterung (vgl. Gaußscher Filter 40) ausreichend gute Ergebnisse K(x,y,r) liefert. Hierbei wird bei der Mittelpunktschätzung bzw. Akkumulierung 52 anstelle von Akkumulationsarrays mit konstanter Größe Arrays, die mit den reziproken Werten der zu detektierenden Kreisdurchmesser skaliert sind, eingesetzt, wie bereits Bezug nehmend auf Fig. 1 erläutert wurde. Hierdurch kann der Speicherbedarf der Akkumulationsarrays in etwa halbiert werden. In den Mittelpunktschätzungen werden jeweils die einzelnen Akkumulatorzellen oder optional auch n x n-Akkumulatorzellen (z.B. 2x2-Akkumulatorzellen) die sich aus der um den reziproken Wert korrigierten Pixelposition plus bzw. minus 1 Einheitswerte ergibt, um 1 erhöht bzw. erniedrigt. Durch die Veränderung der Akkumulatorzellen (oder der n x n-Akkumulatorzellen) in Kombination mit den skalierten Akkumulatorarrays kann gegenüber dem Standardverfahren mit nur einer Änderung von einer (1x1) Akkumulatorzelle der Verarbeitungsschritt des zweiten Gaußschen Filters entfallen. Wie bereits angekündigt, ist die Maximumsdetektion 42 weitgehend identisch mit der Bezug nehmend auf Fig. 3 beschriebenen Einheit 42.

Das Ergebnis für die Akkumulierung für sechs verschiedene Kreisradien ist in Fig. 3d exemplarisch für das bereits aus Fig. 3b bekannte Eingangsbild 32 gezeigt. Wie zu erkennen ist, weist das Akkumulatorarray 44a' dieselbe Auflösung wie das Akkummulatorarray 44a bzw. wie das Eingangsbild 32 auf. Dieses Akkumulatorarray 44a' dient zur Erkennung von kleineren Kreisradien. Für größere Kreisradien werden die zunehmend niedriger aufgelösten Akkumulatorarrays 44b', 44c', 44d', 44e' und 44f' eingesetzt, so dass mit reduziertem Rechenaufwand die größeren Radien detektiert werden können. Es sei an dieser Stelle angemerkt, dass die Auflösungsreduzierung von dem Array 44a' zu dem Array 44f' anhand kleiner werdender Arraybilder illustriert ist, bei dem also die Pixelgröße gleich bleibt. Wie auch im obigen Ausführungsbeispiel sind die zwei Kreise, zugehörend zu den Schildern aus dem Eingangsbild 32, bevorzugt in den Arrays 44c' und 44d' ermittelbar. Durch die Änderung an der Prozesskette bzw. der Auflösungsreduzierung bei größer werdenden gesuchten Radien, ergibt sich zwar eine Lokalisierungsungenauigkeit, die allerdings relativ zu dem Kreisdurchmesser für alle gesuchten Kreisradien konstant ist. Von einer anderen Seite betrachtet heißt das, dass bei dem Standardverfahren die Mittelpunkte für große Kreisdurchmesser (im Vergleich zu den Mittelpunkten für kleine Durchmesser) wesentlich genauer lokalisiert werden können, dies allerdings mit einem exponentiell hohen Rechenaufwand verbunden ist. Also stellt diese Lokalisierungsungenauigkeit, erzeugt durch die verbesserte Prozesskette 50, für die praktische Anwendung keinen wirklichen Nachteil dar.

Bezug nehmend auf Fig. 1 sei angemerkt, dass die Vorrichtung 10 auch mehr als die dargestellten zwei Akkumulatorarrays mit unterschiedlich großer Auflösung, z.B. m Akkumulatorarrays für m unterschiedliche, gesuchte Kreisradien aufweisen kann.

Auch wenn teilweise anders dargestellt, sei angemerkt, dass die Auflösung des Arrays, genutzt für die die Skalierung mittels des kleinsten (zu suchenden Radius) nicht zwingend der nativen Auflösung entsprechen muss, also gegenüber der Ausgangsbild bereits reduziert sein kann.

Auch wenn in den obigen Ausführungen von Kreisdetektion gesprochen wurde, sein an dieser Stelle angemerkt, dass dies Verfahren allgemein für Kreissegmente, also nicht geschlossene Kreise analog eingesetzt werden kann. Entsprechend weiteren Ausführungsbeispielen kann die Vorrichtung auch ausgebildet sein, Kreise, welche nicht 100% symmetrisch sind, also ellipsenförmige Elemente zu detektieren, wenn die Abweichung von dem punktsymmetrischen Kreis nur unerheblich ist, also wenn beispielsweise eine Abweichung von ±30% vorherrscht (Verhältnis der zwei Ellipsendiagonalen).

Entsprechend weiteren Ausführungsbeispielen dient die Kreissegmentdetektion zur Verkehrszeichenerkennung. Hierbei wird das Verkehrszeichen hinsichtlich der Form untersucht, um dieses in einem weiteren Prozessschritt zu den bekannten Klassen von runden Verkehrszeichen zuzuordnen.

Eine Erweiterung des Detektors auf weitere Verkehrszeichen z.B. achteckige, dreieckige oder rechteckige Verkehrszeichen ist ebenso möglich, wie im Folgenden ausgeführt wird. Das obige Prinzip der Auflösungsreduzierung von Akkumulatorarrays reziprok abhängig von der Größe der gesuchten geometrischen Form ist auf die Erkennung weiterer geometrischer Formen, insbesondere konvexer Formen, wie z.B. Dreiecke, Vierecke, Sechseck, Raute, Achtecke oder n-Ecke übertragbar. Hierbei ist es vorteilhaft, wenn die geometrischen Formen rotationsinvariant sind. Dies trifft beispielsweise auf gleichschenklige Dreiecke, Quadrate, gleichschenklige n-Ecke oder allgemein regelmäßige Polygone zu. Der Hintergrund hierzu ist, dass bei derartigen Formen eine Streckung der Gradientenvektoren mit einem Streckungsfaktor bzw. bei einer isotropen Streckung weiterhin in einem lokalen Maximum, das typischerweise in dem Schwerpunkt der geometrischen Form liegt, resultiert. Abhängig von der geometrischen Grundform kann das Maximum unterschiedliche Ausprägungen, wie z.B. eine Kreuzform bei einem Viereck oder eine Sternform bei einem Dreieck oder Polygon haben. Allen diesen Ausprägungen ist gemein, dass sie ein lokales punktähnliches Akkumulationsmaximum, z.B. durch den gemeinsamen Schnittpunkt der Akkumulationslinien ausbilden. Entsprechend dem obigen Ausführungsbeispiel ist dieses Akkumulationsmaximum dem Schwerpunkt der geometrischen Form zuordenbar.

Nachfolgend wird die Detektion einer geometrischen Grundform bzw. eines Polygons exemplarisch anhand der Detektion eines Quadrats beschrieben. Entsprechend den obigen Ausführungsbeispielen wird z.B. unter Zuhilfenahme der Bildvorverarbeitungseinheiten auf Basis eines Originalbildes die Ermittlung der Gradienten und der zugehörigen Gradientenvektoren je Pixel durchgeführt. Bei einem Quadrat zeigen die Gradientenvektoren zu den jeweiligen Symmetrieachsen (Spiegelsymmetrie) bzw. allgemein zu dem Symmetriezentrum hin. Diese Gradientenvektoren werden, wie oben erläutert, in unterschiedlichen Akkumulatorarrays mit abnehmender Auflösung bei zunehmender Skalierungsstufe (Streckung) mit den entsprechenden Streckungsfaktoren, die je Array variieren, skaliert und die resultierenden Endpunkte akkumuliert. Insofern entsprechen hier die Streckungsfaktoren den obigen Ausführungsbeispielen zur Skalierung genutzten Radien. Wenn der Streckungsfaktor entsprechend gewählt ist bzw. - für das Ausführungsbeispiel "Quadrat" - wenn der Streckungsfaktor der halben Kantenlänge entspricht, werden die resultierenden Endpunkte von zwei gegenüberliegenden (parallelen) Seitenlinien des Quadrats in eine gemeinsame Linie, nämlich die Spiegelsymmetrieachse, abgebildet und hier aufakkumuliert. Infolgedessen ergibt sich für den Fall Quadrat durch die zwei Kantenpaare ein kreuzförmiges Akkumulationsmaximum entlang der Symmetrieachsen in dem Akkumulatorarray, welches der halben Seitenlänge des Quadrates entspricht, wobei sich die zwei Linien in einem Punkt, nämlich dem Schwerpunkt des Quadrates treffen und hier zu einem lokalen Maxima aufakkumuliert werden. Anhand dessen, in welchem Akkumulatorarray das lokale Maximum detektiert ist, kann der gesuchte Geometrieparameter, hier die Kantenlänge des Quadrats, ermittelt werden, da der Streckungsfaktor des das Maximum ausbildenden Arrays in Relation zu der Kantenläge steht. Ferner ist anhand der Position des Maximums die Lage des geometrischen Objekts in dem Bild bestimmbar. Durch die Reduzierung der Auflösung der Akkumulatorarrays für größere geometrische Formen bilden sich die Akkumulationsmaxima wesentlich deutlicher aus, so dass auch hier keine nachträgliche Filterung notwendig ist. Die Gründe hierfür sind anlog zu den oben Erläuterten. Entsprechend zusätzlichen Ausführungsbeispielen kann durch die Ausrichtung der Form des Akkumulationsmaximums ein Rückschluss auf die Ausrichtung bzw. die Orientierung der in dem Originalbild gesuchten Form gezogen werden. Insofern ist auch auf Basis des oben beschriebenen Verfahrens vorteilhafterweise, d.h. also mit reduziertem Ressourceneinsatz, eine Detektion eines Quadrates inklusive Position und Seitenlänge möglich. Übertragen auf den allgemeinen Fall des (regelmäßigen) Polygons kann also festgestellt werden, dass durch das oben beschriebene Verfahren sowohl der Schwerpunkt anhand der Maxima, wie auch ein weiterer Geometrieparameter der gesuchten Grundform (z.B. ein Größenparameter) detektierbar ist. In Summe heißt das also, dass die oben beschrieben Vorrichtung bzw. das oben beschrieben Verfahren auf weitere geometrische Grundformen erweiterbar ist, wobei dann statt dem Radius ein andere von der Geometrie der gesuchten Form abhängiger Streckungsfaktor zur Skalierung genutzt wird. Die Auflösung der unterschiedlichen Akkumulatorarrays hängt folglich ebenfalls von dem Streckungsfaktor ab. Entsprechend weiteren Anwendungen kann die Kreisdetektion auch für weitere Bild- und Videoanalysesysteme, wie z.B. im Bereich der visuellen Objektuntersuchung genutzt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10, 50) zur Detektion von geometrischen Grundformen, die Vorrichtung (10, 50) ist ausgebildet,
um Gradienten zu detektieren, sodass Gradientenvektoren (13a", 13b") erhalten werden; und
um die Gradientenvektoren (13a", 13b") mit jeweiligen Streckungsfaktoren zu skalieren und resultierende Endpunkte (13a*, 13b*) der jeweiligen, skalierten Gradientenvektoren (13a", 13b") in den den jeweiligen Streckungsfaktoren zugeordneten Akkumulatorarrays (16a, 16b) zu akkumulieren,
wobei die Grundformen ein Kreis, ein Kreissegment, ein gleichseitiges Dreieck, Quadrat, gleichseitiges Achteck und/oder gleichseitiges Polygon umfassen;
**dadurch gekennzeichnet, dass** eine Anzahl an Akkumulationszellen der Akkumulatorarrays (16a, 16b) umso geringer ist, je größer der jeweilige Streckungsfaktor ist.

2. Vorrichtung (10, 50) gemäß Anspruch 1, wobei die Streckungsfaktoren von einer Seitenlänge, halben Seitenlänge oder Diagonalenlänge der geometrischen Grundform abhängig ist.

3. Vorrichtung (10, 50) gemäß einem der Ansprüche 1 bis 2, wobei die Vorrichtung (10, 50) ausgebildet ist, um in den den jeweiligen Streckungsfaktoren zugeordneten Akkumulatorarrays (16a, 16b) ein lokales Akkumulationsmaximum einer Vielzahl der Endpunkte (13a*, 13b*) zu ermitteln.

4. Vorrichtung (10, 50) gemäß Anspruch 3, wobei eine Position des ermittelten lokalen Akkumulationsmaximums in einem der den jeweiligen Streckungsfaktoren zugeordneten Akkumulatorarrays (16a, 16b) einem Schwerpunkt der detektierten Grundform (13a, 13b) entspricht.

5. Vorrichtung (10, 50) gemäß einem der vorherigen Ansprüche, wobei die Vorrichtung zur Kreissegmentdetektion dient und als die jeweiligen Streckungsfaktoren jeweilige Radien verwendet werden.

6. Vorrichtung (10, 50) gemäß Anspruch 5, wobei die Vorrichtung (10, 50) ausgebildet ist, um in den den jeweiligen Radien zugeordneten Akkumulatorarrays (16a, 16b) ein lokales Akkumulationsmaximum einer Vielzahl der Endpunkte (13a*, 13b*) zu ermitteln.

7. Vorrichtung (10, 50) gemäß Anspruch 6, wobei anhand von einem lokalen Akkumulationsmaximum ein Kreissegment oder ein Vollkreis (13a, 13b) detektierbar ist.

8. Vorrichtung (10, 50) gemäß Anspruch 7, wobei eine Position des ermittelten lokalen Akkumulationsmaximums in einem der den jeweiligen Radien zugeordneten Akkumulatorarrays (16a, 16b) einem Mittelpunkt des detektierten Kreissegments oder des detektierten Vollkreises (13a, 13b) entspricht.

9. Vorrichtung (10, 50) gemäß Anspruch 7 oder 8, wobei der jeweilige dem Akkumulatorarray (16a, 16b) zugeordnete Radius des Akkumulatorarrays (16a, 16b), in welchem das lokale Akkumulationsmaximum detektiert ist, einem Radius des detektierten Kreissegments oder des detektierten Vollkreises (13a, 13b) entspricht.

10. Vorrichtung (10, 50) gemäß einem der Ansprüche 1 bis 9, wobei die Anzahl an Akkumulationszellen der Akkumulatorarrays (16a, 16b) mit einen reziproken Wert der zugeordneten Radien oder Streckungsfaktoren skaliert ist.

11. Vorrichtung (10, 50) gemäß einem der Ansprüche 1 bis 10, wobei die Vorrichtung (10, 50) ausgebildet ist, um beim Detektieren der Gradienten relevante Gradientenpunkte (13a', 13b'), für die die Gradientenvektoren (13a", 13b") erhalten werden, zu ermitteln.

12. Vorrichtung (10, 50) gemäß Anspruch 11, wobei ein Gradientenpunkt (13a', 13b'), relevant ist, wenn der Betrag des Gradientenvektors (13a", 13b") größer als ein vorgegebener Schwellwert ist.

13. Vorrichtung (10, 50) gemäß einem der Ansprüche 3, 4, 6 bis 12, wobei das lokale Akkumulationsmaximum für eine nxn Akkumulationszelle mit n>1 ermittelt wird.

14. Vorrichtung (10, 50) gemäß einem der Ansprüche 7 bis 13, wobei die Vorrichtung (10, 50) ausgebildet ist, um das Kreissegment oder ein Vollkreis (13a, 13b) einem Verkehrsschild in einem Ausgangsbild (12, 32), aus welchem die Gradienten resultieren, zuzuordnen.

15. Vorrichtung (10, 50) gemäß einem der Ansprüche 1 bis 14, wobei die Vorrichtung (10, 50) Mittel zur Bildvorverarbeitung (34, 36) umfasst, die ausgebildet sind, um auf Basis eines Ausgangsbildes (12, 32) die Gradienten zu ermitteln.

16. Vorrichtung (10, 50) gemäß Anspruch 15, wobei die Mittel zur Bildvorverarbeitung (34, 36) einen Gaußschen Weichzeichner (34) und/oder einen Soebel-Filter (36) umfassen.

17. Verfahren (100) zur Detektion von geometrischen Grundformen, mit folgenden Schritten,
Detektieren von Gradienten, sodass Gradientenvektoren (13a", 13b") erhalten werden; und
Skalieren (122) der Gradientenvektoren (13a", 13b") mit jeweiligen Streckungsfaktoren und Akkumulieren (124) der resultierenden Endpunkte (13a*, 13b*) der jeweiligen, skalierten Gradientenvektoren (13a", 13b") in den den jeweiligen Streckungsfaktoren zugeordneten Akkumulatorarrays (16a, 16b),
wobei die Grundformen ein Kreis, ein Kreissegment, ein gleichseitiges Dreieck, Quadrat, gleichseitiges Achteck und/oder gleichseitiges Polygon umfassen;
**dadurch gekennzeichnet, dass** eine Anzahl an Akkumulationszellen der Akkumulatorarrays (16a, 16b) umso geringer ist, je größer der jeweilige Streckungsfaktor ist.

18. Verfahren (100) gemäß Anspruch 17 , wobei das Verfahren (100) den Schritt des Ermittelns (130) eines lokalen Akkumulationsmaximums einer Vielzahl der Endpunkte in den den jeweiligen Radien oder Streckungsfaktoren zugeordneten Akkumulatorarrays (16a, 16b) umfasst.

19. Verfahren (100) gemäß einem der Ansprüche 17 bis 18, wobei das Verfahren zur Kreissegmentdetektion dient und als die jeweiligen Streckungsfaktoren jeweilige Radien verwendet werden.

20. Computerprogramm mit einem Programmcode zur Durchführung des Verfahrens (100) nach einem der Ansprüche 17 bis 19, wenn das Programm auf einem Computer abläuft.

## Claims

1. A device (10, 50) for detecting geometrical basic shapes, the device (10, 50) being configured to:
detect gradients so that gradient vectors (13a", 13b") are obtained; and
scale the gradient vectors (13a", 13b") by respective stretching factors and accumulate resulting end points (13a*, 13b*) of the respective scaled gradient vectors (13a", 13b") in the accumulator arrays (16a, 16b) associated to the respective stretching factors,
wherein the basic shapes comprise a circle, segment of a circle, equilateral triangle, square, equilateral octagon and/or equilateral polygon;
**characterized in that** a number of accumulation cells of the accumulator arrays (16a, 16b) is the smaller, the greater the respective stretching factor.

2. The device (10, 50) in accordance with claim 1, wherein the stretching factors are dependent on a side length, half a side length, or diagonal length of the geometrical basic shape.

3. The device (10, 50) in accordance with any of claims to 1 to 2, the device (10, 50) being configured to determine a local accumulation maximum of a plurality of end points (13a*, 13b*) in the accumulator arrays (16a, 16b) associated to the respective stretching factors.

4. The device (10, 50) in accordance with claim 3, wherein a position of the local accumulation maximum determined in one of the accumulator arrays (16a, 16b) associated to the respective stretching factors corresponds to a center of gravity of the basic shape (13a, 13b) detected.

5. The device (10, 50) in accordance with any of the preceding claims, the device serving for detecting a segment of a circle and respective radii are used as the respective stretching factors.

6. The device (10, 50) in accordance with claim 5, the device (10, 50) being configured to determine a local accumulation maximum of a plurality of end points (13a*, 13b*) in the accumulator arrays (16a, 16b) associated to the respective radii.

7. The device (10, 50) in accordance with claim 6, wherein a segment of a circle or a full circle (13a, 13b) is detectable using a local accumulation maximum.

8. The device (10, 50) in accordance with claim 7, wherein a position of the local accumulation maximum determined in one of the accumulator arrays (16a, 16b) associated to the respective radii corresponds to a center point of the segment of circle detected or the full circle (13a, 13b) detected.

9. The device (10, 50) in accordance with claim 7 or 8, wherein the respective radius of the accumulator array (16a, 16b) associated to the accumulator array (16a, 16b), where the local accumulation maximum is detected corresponds to a radius of the segment of circle detected or the full circle (13a, 13b) detected.

10. The device (10, 50) in accordance with any of claims 1 to 9, wherein the number of accumulation cells of the accumulator arrays (16a, 16b) is scaled by a reciprocal value of the associated radii or stretching factors.

11. The device (10, 50) in accordance with any of claims 1 to 10, the device (10, 50) being configured to determine, when detecting the gradients, relevant gradient points (13a', 13b'), for which the gradient vectors (13a", 13b") are obtained.

12. The device (10, 50) in accordance with claim 11, wherein a gradient point (13a', 13b') is relevant when the magnitude of the gradient vector (13a", 13b") is greater than a predetermined threshold value.

13. The device (10, 50) in accordance with any of claims 3, 4, 6 to 12, wherein the local accumulation maximum is determined for nxn accumulation cell with n>1.

14. The device (10, 50) in accordance with any of claims 7 to 13, the device (10, 50) being configured to associate the segment of circle or a full circle (13a, 13b) to a traffic sign in a starting image (12, 32) from which the gradients result.

15. The device (10, 50) in accordance with any of claims 1 to 14, the device (10, 50) comprising means for image preprocessing (34, 36) configured to determine the gradients based on a starting image (12, 32).

16. The device (10, 50) in accordance with claim 15, wherein the means for image preprocessing (34, 36) comprise a Gaussian blur (34) and/or a Soebel filter (36).

17. A method (100) for detecting geometrical basic shapes, comprising the steps of:
detecting gradients so that gradient vectors (13a", 13b") are obtained; and
scaling (122) the gradient vectors (13a", 13b") by respective stretching factors and accumulating (124) the resulting end points (13a*, 13b*) of the respective scaled gradient vectors (13a", 13b") in the accumulator arrays (16a, 16b) associated to the respective stretching factors,
wherein the basic shapes comprise a circle, segment of a circle, equilateral triangle, square, equilateral octagon and/or equilateral polygon;
**characterized in that** a number of accumulation cells of the accumulator arrays (16a, 16b) is the smaller, the greater the respective stretching factor.

18. The method (100) in accordance with claim 17, the method (100) comprising the step of determining (130) a local accumulation maximum of a plurality of end points in the accumulator arrays (16a, 16b) associated to the respective radii or stretching factors.

19. The method (100) in accordance with any of claims 17 to 18, the method serving for detecting a segment of a circle, wherein respective radii are used as the respective stretching factors.

20. A computer program comprising program code for performing the method (100) in accordance with any of claims 17 to 19, when the program runs on a computer.

## Revendications

1. Dispositif (10, 50) de détection de formes géométriques de base, dans lequel le dispositif (10, 50) est conçu
pour détecter des gradients de sorte que soient obtenus des vecteurs de gradients (13a", 13b"); et
pour échelonner les vecteurs de gradients (13a" 13b") par des facteurs d'allongement respectifs et pour accumuler les points d'extrémité résultants (13a*, 13b*) des vecteurs de gradients échelonnés respectifs (13a", 13b") dans les matrices d'accumulation (16a, 16b) associées aux facteurs d'allongement respectifs,
dans lequel les formes de base comprennent un cercle, un segment de cercle, un triangle équilatéral, un carré, un octogone équilatéral et/ou un polygone équilatéral;
**caractérisé par le fait qu'**un nombre de cellules d'accumulation des matrices d'accumulation (16a, 16b) est d'autant plus petit que le facteur d'allongement respectif est grand.

2. Dispositif (10, 50) selon la revendication 1, dans lequel les facteurs d'allongement sont fonction d'une longueur de côté, d'une demi-longueur de côté ou d'une longueur de diagonale de la forme géométrique de base.

3. Dispositif (10, 50) selon l'une des revendications 1 à 2, dans lequel le dispositif (10, 50) est conçu pour déterminer, dans les matrices d'accumulation (16a, 16b) associées aux facteurs d'allongement respectifs, un maximum d'accumulation locale d'une pluralité de points d'extrémité (13a*, 13b*).

4. Dispositif (10, 50) selon la revendication 3, dans lequel une position du maximum d'accumulation locale détecté dans l'une des matrices d'accumulation (16a, 16b) associées aux facteurs d'allongement respectifs correspond à un centre de gravité de la forme de base (13a, 13b) détectée.

5. Dispositif (10, 50) selon l'une des revendications précédentes, dans lequel le dispositif sert à la détection d'un segment circulaire et comme facteurs d'allongement respectifs sont utilisés les rayons respectifs.

6. Dispositif (10, 50) selon la revendication 5, dans lequel le dispositif (10, 50) est conçu pour déterminer dans les matrices d'accumulation associées aux rayons respectifs (16a, 16b) un maximum d'accumulation locale d'une pluralité de points d'extrémité (13a*, 13b*).

7. Dispositif (10, 50) selon la revendication 6, dans lequel peut être détecté, à l'aide d'un maximum d'accumulation locale, un segment circulaire ou un cercle complet (13a, 13b).

8. Dispositif (10, 50) selon la revendication 7, dans lequel une position du maximum d'accumulation locale déterminé dans l'une des matrices d'accumulation (16a, 16b) associées aux rayons respectifs correspond à un centre du segment de cercle détecté ou du cercle complet détecté (13a, 13b).

9. Dispositif (10, 50) selon la revendication 7 ou 8, dans lequel le rayon de la matrice d'accumulation respective (16a, 16b) associé à la matrice d'accumulation (16a, 16b) dans laquelle est détecté le maximum d'accumulation locale correspond à un rayon du segment de cercle détecté ou du cercle complet (13a, 13b) détecté.

10. Dispositif (10, 50) selon l'une des revendications 1 à 9, dans lequel le nombre de cellules d'accumulation des matrices d'accumulation (16a, 16b) est échelonné par une valeur réciproque des rayons ou facteurs d'allongement associés.

11. Dispositif (10, 50) selon l'une des revendications 1 à 10, dans lequel le dispositif (10, 50) est conçu pour déterminer, lors de la détection des gradients, des points de gradient (13a', 13b') pertinents pour lesquels sont obtenus les vecteurs de gradients (13a", 13b").

12. Dispositif selon la revendication 11, dans lequel un point de gradient (13a', 13b') est pertinent lorsque la quantité du vecteur de gradients (13a", 13b") est supérieure à une valeur de seuil prédéterminée.

13. Dispositif (10, 50) selon l'une des revendications 3, 4, 6 à 12, dans lequel le maximum d'accumulation locale pour une cellule d'accumulation nxn est déterminé par n> 1.

14. Dispositif (10, 50) selon l'une des revendications 7 à 13, dans lequel le dispositif (10, 50) est conçu pour associer au segment de cercle ou à un cercle complet (13a, 13b) un panneau de signalisation dans une image de départ (12, 32) de laquelle résultent les gradients.

15. Dispositif (10, 50) selon l'une des revendications 1 à 14, dans lequel le dispositif (10, 50) comporte des moyens de prétraitement (34, 36) qui sont conçus pour déterminer les gradients sur base d'une image de départ (12, 32).

16. Dispositif (10, 50) selon la revendication 15, dans lequel les moyens de prétraitement (34, 36) comportent un flou gaussien (34) et/ou un filtre de Sobel (36).

17. Procédé (100) de détection de formes géométriques de base, aux étapes suivantes consistant à
détecter des gradients de sorte que soient obtenus des vecteurs de gradients (13a", 13b"); et
échelonner (122) les vecteurs de gradients (13a" 13b") par des facteurs d'allongement respectifs et accumuler (124) les points d'extrémité résultants (13a*, 13b*) des vecteurs de gradients échelonnés respectifs (13a", 13b") dans les matrices d'accumulation (16a, 16b) associées aux facteurs d'allongement respectifs,
dans lequel les formes de base comprennent un cercle, un segment de cercle, un triangle équilatéral, un carré, un octogone équilatéral et/ou un polygone équilatéral;
**caractérisé par le fait qu'**un nombre de cellules d'accumulation des matrices d'accumulation (16a, 16b) est d'autant plus petit que le facteur d'allongement respectif est grand.

18. Procédé (100) selon la revendication 17, dans lequel le procédé (100) comporte l'étape consistant à déterminer (130) un maximum d'accumulation local d'une pluralité de points d'extrémité dans les matrices d'accumulation (16a, 16b) associées aux rayons ou facteurs d'allongement respectifs.

19. Procédé (100) selon l'une des revendications 17 à 18, dans lequel le procédé sert à la détection d'un segment circulaire et comme facteurs d'allongement respectifs sont utilisés les rayons respectifs.

20. Programme d'ordinateur avec un code de programme pour réaliser le procédé (100) selon l'une des revendications 17 à 19 lorsque le programme est exécuté sur un ordinateur.
